# EUROPÄISCHE PATENTSCHRIFT

(11) **EP 1 917 167 B1**
(45) Veröffentlichungstag und Bekanntmachung des Hinweises auf die Patenterteilung: **30.03.2011**
(21) Anmeldenummer: 06831754.4
(22) Anmeldetag: 25.08.2006
(51) Int. Cl.: B60S 1/08, G01P 3/487

(54) **ELEKTROMOTORISCHER HILFSANTRIEB FÜR FAHRZEUGE**
ELECTROMOTIVE SERVODRIVE FOR VEHICLES
DISPOSITIF D'ENTRAINEMENT AUXILIAIRE ELECTROMOTEUR POUR DES VEHICULES A MOTEUR

(30) Priorität: 27.08.2005 DE 102005040647
(43) Veröffentlichungstag der Anmeldung: 07.05.2008
(73) Patentinhaber: VALEO SYSTEMES D'ESSUYAGE, 78321 La Verrière (FR)
(72) Erfinder: HARTMANN, Werner, 71665 Vaihingen/Enz (DE); SEBASTIAN GONZALEZ, Miguel Angel, 70376 Stuttgart (DE)
(74) Vertreter: Vötsch, Reiner
(86) Internationale Anmeldenummer: PCT/IB2006/003679
(87) Internationale Veröffentlichungsnummer: WO 2007/036810

(56) Entgegenhaltungen:
- EP-A1- 0 359 853
- WO-A-2005/040728
- DE-A1- 19 848 081
- GB-A- 2 197 483

## Beschreibung

Die Erfindung bezieht sich auf einen elektromotorischen Hilfsantrieb für Fahrzeuge, insbesondere Straßenfahrzeuge gemäß Oberbegriff Patentanspruch 1, wie er aus der DE 198 48 081 A1 bekannt ist.

Elektromotorische Hilfsantriebe die in der Regel aus einem Elektromotor, beispielsweise Gleichstrommotor und einem nachgeschalteten Getriebe, beispielsweise Schneckengetriebe bestehen, werden in Fahrzeugen für verschiedenste Funktionen eingesetzt, beispielsweise als Scheibenwischerantrieb, als Stellantrieb z.B. zum Verstellen von Fahrzeugsitzen, zum öffnen und Schließen von Schiebedächern oder Fahrzeugfenstem usw.

In vielen Fällen ist es erforderlich, z.B. am Getriebe des Hilfsantriebs eine Sensoranordnung oder Sensorik vorzusehen, mit der die Drehgeschwindigkeit, die Drehrichtung, die Winkelstellung und dabei insbesondere auch die absolute Winkelsteilung z.B. der Getriebeausgangswelle oder eines Getrieberades exakt bestimmt werden, um hiermit den Elektromotor zu steuern, z.B. für eine reversierende Bewegung eines Scheibenwischerantriebs und/oder um die Einhaltung vorgegebener Winkelpositionen für eine Park- und/oder Umkehrstellung des Wischarmes einer Scheibenwischeranordnung und/oder um z.B. der absoluten Winkelstellung entsprechende Daten für Steuerungs- oder Synchronisationszwecke usw. an andere Funktionselemente des Fahrzeugs, beispielsweise auch über ein Bussystem zu übertragen und/oder um den als Stellantrieb ausgebildeten elektromotorischen Hilfsantrieb bei Erreichen vorgegebener oder vorgewählter Positionen zu stoppen usw.

Bekannt ist weiterhin in einer eher theoretischen Form ein Verfahren sowie ein Messsystem zur Bestimmung einer absoluten Winkelstellung einer Welle (DE 103 60 042 A1). Bei diesem Verfahren bzw. Messsystem wird mit einer Sensorik, die wenigstens zwei Magnetsensoren, welche wenigstens ein von der Größe und Polarität eines Magnetfeldes abhängiges elektrisches Mess- oder Sensorsignal liefern, und eine Permanentmagnet- oder Signalgeberanordnung mit wenigstens einem Permanentmagneten aufweist, verschiedene jeweils eine relative Winkelstellung repräsentierende Sensorsignale erzeugt. Aus der Kombination dieser Sensorsignale wird dann in einer Elektronik die absolute Winkelstellung ermittelt, Die Magnetsensoren sind dabei ortsfest angeordnet, und zwar entweder unter der Welle und mit ihrer Sensormitte auf der Achse dieser Welle, allerdings bezüglich ihrer radial zur Wellenachse orientierten Sensor-Achse um einen Winkelbetrag um die Wellenachse gegeneinander verdreht, oder aber die Magnetsensoren sind mit einem radialen Abstand seitlich von der Wellenachse und um diese Achse um einen Winkelbetrag kleiner als 90° gegeneinander versetzt vorgesehen. Die die Permanentmagnetanordnung bildenden Pennanentmagnete sind an der Welle vorgesehen und laufen mit dieser um.

Bekannt ist weiterhin ein Verfahren zur Ermittlung der Winkelposition einer Drehachse oder Welle (DE 195 487 385 C2), bei der auf einem Ende der Welle als Signalgeber ein radial zur Achse orientierter Permanentmagnet vorgesehen ist, der mit zwei in der Achsrichtung der Welle gegenüber dem Permanentmagneten versetzten magnetischen Sensoren zusammenwirkt, die ihrerseits bezüglich ihrer Sensorwirkachse um 90° relativ zueinander verdreht sind, sodass bei umlaufender Welle der eine Magnetsensor ein sinusförmiges Sensorsignal und der andere Magnetsensor ein kosinusförmiges Sensorsignal liefert.

Aufgabe der Erfindung ist es, einen elektromotorischen Hilfsantrieb nach dem Oberbegriff des Anspruchs 1 derart weiterzubilden, dass eine besonders Kompakt Anordnung des Sensorelements ermöglicht wird.

Zur Lösung dieser Aufgabe ist ein elektromotorischer Hilfsantrieb entsprechend dem Patentanspruch 1 ausgebildet. Weiterbildungen der Erfindung sind Gegenstand der Unteransprüche.

Bei dem erfindungsgemäßen Hilfsantrieb ist die wenigstens eine Signalgeber- oder Permanentmagnetanordnung der Sensorik stirnseitig an einem Wellenende vorgesehen, und zwar ebenso wie der wenigstens eine Magnetsensor der Sensorik innerhalb einer Lageranordnung für die Lagerung dieses Wellenendes. Bei einer bevorzugten Ausführungsform befindet sich der Magnetsensor auf einer Platine oder einer Printplatte eines elektronischen Steuermoduls oder einer elektronischen Steuereinrichtung. Die Platine oder Printplatte erstreckt sich dann durch Öffnungen, vorzugsweise durch wenigstens eine radiale Öffnung der Lageanordnung auch in das Innere dieser Lageanordnung und ist dort mit dem wenigstens einen Magnetsensor versehen.

Die Vorteile der Erfindung bestehen u.a. darin, dass die Sensorik bzw. deren Elemente im Bereich der Stirnseite des betreffenden Wellenendes und damit zentriert im Bezug auf die Wellenachse vorgesehen werden können, und zwar für einen optimalen Verlauf des wenigstens einen Sensorsignals in Abhängigkeit von der Winkelstellung der Welle, und dass dennoch eine Lagerung der Welle im Bereich ihres mit der Signalgeber- oder Permanentmagnetanordnung versehenen Wellenendes möglich ist. Weiterhin zeichnet sich die Erfindung durch eine vereinfachte und kompakte Bauweise aus. Weitere Vorteile sind u.a., dass die Sensorik zur Ermittlung der Winkelstellung keine grundlegende Änderung bereits vorhandener, bewährter Konstruktionen eines elektromotorischen Hilfsantriebs ohne diese Sensorik erfordert, was insbesondere auch für die konstruktive Ausbildung des Getriebes sowie des Getriebegehäuses gilt. Ein weiterer wesentlicher Vorteil besteht auch darin, dass mit dem von dem wenigstens einen Sensor gelieferten Sensorsignal auch die Position, die Drehgeschwindigkeit und/oder -richtung der Welle ermittelt werden kann, d.h. ein zusätzlicher, beispielsweise von einem Permanentmagneten gebildeter Signalgeber und zugehöriger Sensor für die Ermittlung der Drehgeschwindigkeit und/oder- richtung sind nicht erforderlich, was u.a. auch zur Vereinfachung der Konstruktion und zur Senkung der Produktionskosten insbesondere durch die Reduzierung der zu montierenden Komponenten beiträgt. Speziell bei der Ausbildung der Steuerelektronik bzw. Steuermoduls als Mikroprozessor gestützte Elektronik besteht die Möglichkeit, die Steuerung des elektromotorischen Hilfsantriebs durch einfache Programmänderung den jeweiligen Erfordernissen und/oder Wünschen eines Verwenders oder Kunden optimal anzupassen.

Mit der erfindungsgemäßen Ausbildung bzw. der Sensorik ist bereits unmittelbar nach dem Einschalten des Hilfsantriebs die absolute Winkelstellung der Welle durch die von der Sensorik gelieferten Sensorsignale bekannt.

Die Erfindung wird im Folgenden anhand der Figuren an Ausführungsbeispielen näher erläutert. Es zeigen:
- Fig. 1: einen Schnitt durch das Getriebegehäuse eines elektromotorischen Hilfsantriebs;
- Fig. 2: in perspektivischer Darstellung und in Draufsicht einen deckelartigen Gehäuseteil des Getriebes der Figur 1;
- Fig. 3: in Einzeldarstellung einen Signalgeber- oder Permanentmagnetanordnung zur Verwendung bei in dem Getriebe der Figur 1 vorgesehenen Sensorik;
- Fig. 4: in vergrößerter Darstellung ein Detail der Figur 1;
- Fig. 5: eine Darstellung ähnlich Figur 1 bei einer weiteren möglichen Ausführungsform.

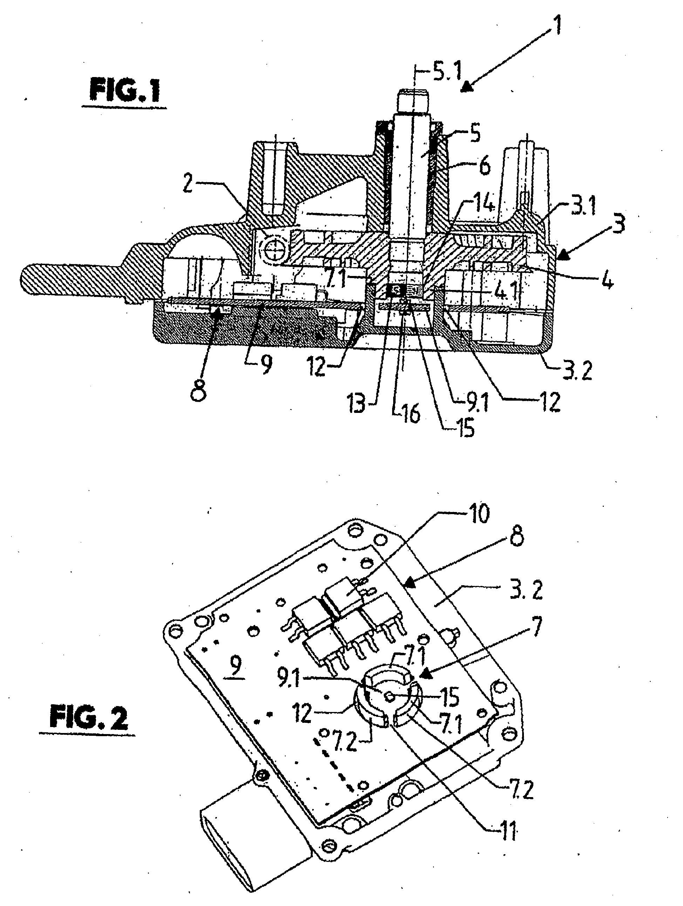

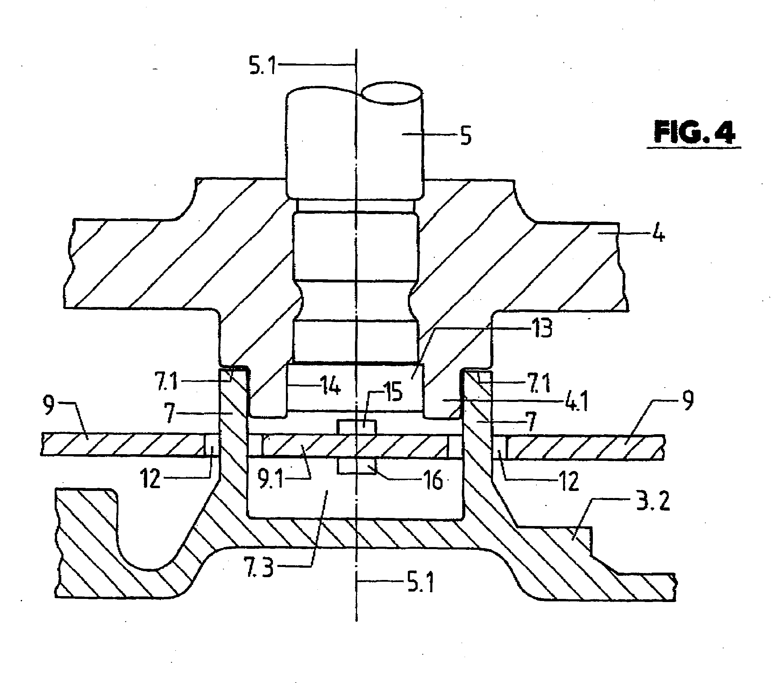

In den Figuren 1 - 4 ist 1 das Getriebe eines elektromotorischen Hilfsantriebs, welcher zusätzlich zu diesem Getriebe 1 auch einen in den Figuren nicht dargestellten Elektromotor aufweist, dessen in der Figur 1 mit unterbrochenen Linien angedeutete Ankerwelle 2 in den Innenraum eines Getriebegehäuses 3 hineinreicht und mit einem dortigen, als Schnecke ausgebildeten Ankerwellenabschnitt mit einem im Inneren des Getriebegehäuses 3 angeordneten und als Schneckenrad ausgebildeten Getrieberad 4 zusammenwirkt. Das Getriebegehäuse 3 ist bei der dargestellten Ausführungsform zweiteilig ausgebildet und besteht aus einem Gehäuseteil 3.1, an welches auch der nicht dargestellte Elektromotor bzw. dessen Gehäuse angeflanscht sind, sowie aus einem deckelartigen Gehäuseteil 3.2, welches bei geschlossenem Getriebegehäuse 3 auf das Gehäuseteil 1 aufgesetzt und mit diesem Gehäuseteil in geeigneter Weise, beispielsweise durch Verschrauben verbunden ist.

Das Getrieberad 4 sitzt auf einer Welle 5, die die Ausgangswelle des Getriebes 1 bzw. des Hilfsantriebes bildet und mit einem Wellenende aus dem Getriebegehäuse 3 bzw. dem Gehäuseteil 3.1 herausgeführt ist und im Bereich dieses Wellenendes mit dem Lager 6 im Gehäuseteil 3.1 drehbar gelagert ist.

Im Bereich des anderen Wellenendes ist die Welle 5 zusätzlich gelagert bzw. axial und radial abgestützt, und zwar durch ein hülsen- oder ringartiges, am Boden des deckelartigen Gehäuseteils 3.2 angeformtes und von der Innenfläche dieses Bodens in den Innenraum des Getriebegehäuses 3 vorstehendes Lagerelement 7. In dieses achsgleich mit der Wellenachse 5.1 angeordnete Lagerelement 7 greift das Getrieberad 4 zur radialen Abstützung mit einem nabenartigen Abschnitt 4.1 ein, welcher eine die Wellenachse 5.1 konzentrisch umschließende ring- oder kreiszylinderförmige Lagerfläche bildet. Weiterhin stützt sich das Getrieberad 4 axial gegen Stirnflächen 7.1 des Lagerelementes 7 ab.

Zur Steuerung des Hilfsantriebes bzw, des nicht dargestellten Elektromotors ist im Getriebegehäuse 3 weiterhin eine elektronische, Mikroprozessor gestützte Steuereinrichtung 8 (Steuermodul) untergebracht, und zwar mit einer Platine oder Printplatte 9, auf der u.a. die Komponenten der Steuereinrichtung 8 vorgesehen sind. Die Steuereinrichtung 8 bzw. deren Printplatte 9 sind an der Innenfläche des deckelartigen Gehäuseteils 3.2 befestigt, und zwar derart, dass bei geschlossenem Getriebegehäuse 3 die Oberflächenseiten der Printplatten 9 in Ebenen senkrecht zur Wellenachse 5.1 orientiert sind und sich die Printplatte 9 etwa dort befindet, wo bei geschlossenem Getriebegehäuse 3 der Rand des deckelartigen Gehäuseteils 3.2 an den Öffnungsrand des Gehäuseteils 3.1 anschließt.

Das hülsenartige Lagerelement 7 ist ausgehend von seinem freien, dem Boden des Gehäuseteils 3.2 entferntliegenden Rand mehrfach geschlitzt, sodass sich durch die entsprechenden Schlitze 11 eine segmentartige Ausbildung des Lagerelementes 7 ergibt, und zwar bei der dargestellten Ausführungsform mit drei Schlitzen 11 die Ausbildung mit drei Ringsegmenten 7.2.

Die Printplatte 9 ist mit den Ringsegmenten 7.2. entsprechenden Öffnungen 12 versehen, sodass die Printplatte 9 bei ihrer Befestigung an der Innenseite des Gehäuseteils 3.2 mit den Öffnungen 12 auf das Lagerelement 7 bzw. auf die Ringsegmente 7.2. aufgeschoben werden kann und die Ringsegmente 7.2 über die dem Gehäuseteil 3.1 zugewandte Seite der Printplatte 9 vorstehen. Die Printplatte 9 weist dann auch einen innerhalb des Lagerelementes 7, d.h. im Inneren 7.3 des Lagerelementes angeordneten Printplattenabschnitt 9.1 auf. Bevorzugt sind die Schlitze 11 so ausgeführt, dass sie sich ausgehend von dem freien Rand des Lagerelementes 7 nicht über die gesamte Höhe dieses Lagerelementes erstrecken, sondern mit Abstand vom Boden des Gehäuseteils 3.2 auf dem Niveau der dem Getrieberad 4 abgewandten Unterseite der Printplatte 9 enden, sodass diese zusätzlich auch im Bereich der Schlitze 11 abgestützt ist.

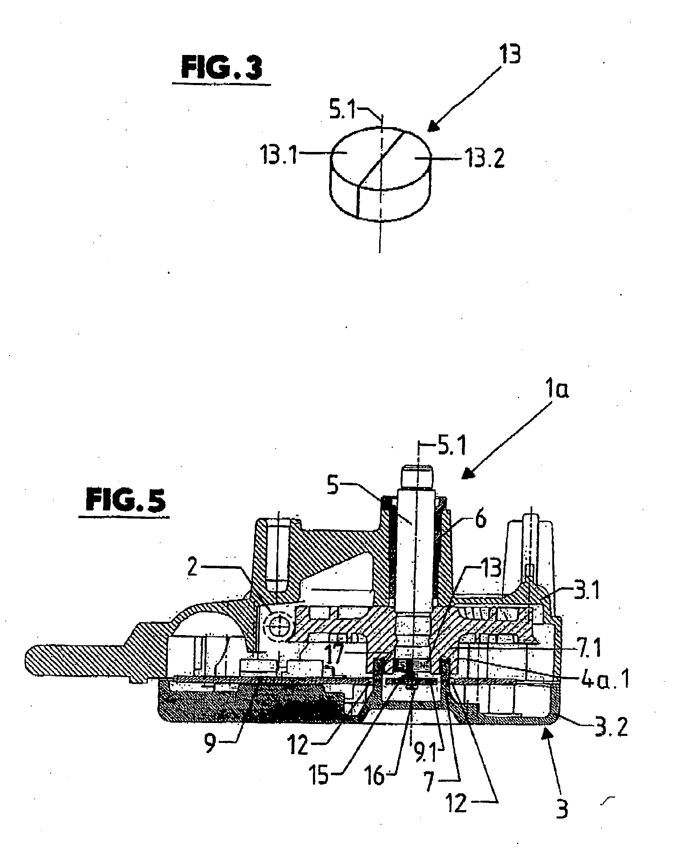

An dem dem Lager 6 entferntliegenden Wellenende der Welle 5 ist stirnseitig eine Permanentmagnetanordnung 13 vorgesehen, die bei der dargestellten Ausführungsform entsprechend der Figur 3 von einem kreisscheibenförmigen Permanentmagneten 13 gebildet ist, welcher so ausgeführt bzw. magnetisiert ist, dass er mit einer Zylinderhälfte 13.1 einen Südpol und an der zweiten Zylinderhälfte 13.2 einen Nordpol ausbildet. Die Bereiche unterschiedlicher Polung mit der größten Feldstärke liegen sich bezogen auf die Achse des zylinderförmigen Permanentmagneten 13 diametral gegenüber. Bei der dargestellten Ausführungsform ist der Permanentmagnet 13 in einer passenden kreiszylinderförmigen Öffnung 14 aufgenommen, die bei der für die Figur 1 gewählten Darstellung an der Unterseite zur Printplatte 9 hin offen und oben durch die Stirnseite der Welle 5 begrenzt ist. Dem Permanentmagneten 13, der mit seiner Achse achsgleich zur Wellenachse 5.1 angeordnet ist, sind gegenüberliegend am Abschnitt 9.1 der Printplatte 9 zwei Magnetsensoren 15 und 16 vorgesehen, und zwar bei der dargestellten Ausführungsform der Magnetsensor 15 an der dem Permanentmagneten 13 zugewandten Oberseite und der Magnetsensor 16 an der dem Permanentmagneten 13 abgewandten Unterseite der Printplatte 9.

Beide Magnetsensoren 15 und 16, die in dem zur Außenseite des Getriebegehäuses 3 verschlossenen Inneren 7.3 des ringförmigen Lagerelementes 7 aufgenommen sind, liefern jeweils zumindest ein wenigstens von dem magnetischen Feld (u.a. Feldstäke und/oder Richtung des Magnetfeldes) und/oder der Änderung des magnetischen Feldes abhängiges elektrisches Sensorsignal. Die Magnetsensoren 15 und 16 sind beispielsweise elektrische Magnetwiderstände, deren Widerstandswert sich in Abhängigkeit von dem magnetischen Feld ändert, oder aber Hallsensoren. Die Magnetsensoren sind auf dem Printplattenabschnitt 9.1 so angeordnet, dass die Wellenachse 5.1 den jeweiligen Sensor 15 bzw. 16 in seinem Sensormittelpunkt schneidet, die Magnetsensoren 15 und 16 mit ihren Wirkachsen radial zur Wellenachse 5.1 orientiert und außerdem um einen vorgegebenen Winkelbetrag kleiner als 90° gegeneinander um die Wellenachse 5.1 verdreht sind.

Beim Drehen der Welle 5 bzw. des Getrieberades 4 wird der Permanentmagnet 13 mitbewegt, sodass die beiden Magnetsensoren 15 und 16 durch das sich drehende Magnetfeld bzw. durch die sich ändernde Orientierung des Magnetfeldes im Bezug auf die Wirkachsen der Sensoren jeweils wenigstens ein Sensorsignal liefern, welches z.B. einen von der Drehstellung der Welle 5 abhängigen, etwa sinus- oder kosinusartigen Verlauf aufweist, wobei die Sensorsignal der Magnetsensoren 15 und 16 der unterschiedlichen Orientierung ihrer Sensorwirkachsen entsprechend phasenverschoben sind. Aufgrund der von den Magnetsensoren 15 und 16 gelieferten Sensorsignale bzw. deren Kombination kann dann in der Steuereinrichtung die absolute Winkelstellung bzw. Drehstellung der Welle 5 ermittelt werden. Weiterhin kann die Steuereinrichtung 8 aus den Sensorsignalen, z.B. aus der zeitlichen Änderung und/oder Polarität und/oder Phasenlage dieser Signale nicht nur die Position, sondern auch die Drehgeschwindigkeit und/oderrichtung der Welle 5 ermitteln.

Durch die beschriebene Ausbildung ist es möglich, trotz der zusätzlichen Abstützung der Welle 5 bzw. des Getrieberades 4 durch das Lagerelement 7 die Elemente der Sensorik achsgleich mit der Wellenachse 5.1 bzw. bezogen auf die Wellenachse 5.1 zentriert anzuordnen, sodass für die Sensorsignale die dem sinus- oder kosinusförmigen Verlauf entsprechende oder zumindest optimal angenäherte Sensorsignale erhalten werden, mit denen die jeweilige Winkelstellung der Welle 5, insbesondere auch die jeweilige absolute Winkelstellung dieser Welle mit hoher Genauigkeit von der Steuereinrichtung 8 ermittelt werden kann.

Mit der Steuereinrichtung 8 und der von dem Permanentmagneten 13 und den Magnetsensoren 15 und 16 gebildeten Sensorik ist beispielsweise eine exakte Steuerung des elektromotorischen Hilfsantriebes bzw. des Elektromotors dieses Antriebs z.B. für eine reversierende Drehbewegung der Welle 5 möglich. Weiterhin kann die von der Sensorik ermittelte Winkelstellung der Welle 5 auch für andere Steuerungs- und Überwachungszwecke verwendet werde, beispielsweise zur synchronen Ansteuerung des Hilfsantriebes mit weiteren Funktionselementen, wobei insbesondere auch eine Übertragung der von der Sensorik ermittelten absoluten Winkelstellung über Bussysteme z.B. an weitere Funktions- und Steuerelemente oder Einrichtungen möglich ist. Sofern der Hilfsantrieb bzw, das Getriebe 1 Teil eines Stellantriebes sind, z.B. für eine Sitzverstellung, für das Öffnen und Schließen eines Schiebedachs oder einer Fahrzeugscheibe usw. können die Sensorik bzw. die von dieser gelieferten Sensorsignale auch zur Überwachung und/oder Steuerung des jeweiligen Stellweges und/oder der zulässigen Grenzen einer Bewegung usw. verwendet werden.

Weiterhin ist es selbstverständlich auch möglich, die von der Sensorik gelieferten Sensorsignale zur Ermittlung der Drehgeschwindigkeit und/oder -richtung der Welle 5 zu nutzen.

Die Figur 5 zeigt in einer Darstellung wie Figur 1 als weitere Ausführungsform ein Getriebe 1a, welches sich von dem Getriebe 1 im Wesentlichen nur dadurch unterscheidet, dass sich das dem Getrieberad 4 entsprechende Getrieberad 4a sowohl an der Innenfläche, als auch an der Außenfläche des Lagerelements 7 bzw. der entsprechenden Ringsegmente 7.2. abstützt. Hierfür ist das Getrieberad 4a an einem nabenartigen Abschnitt 4a.1 mit einer stirnseitig offenen, die Wellenachse 5.1 konzentrisch umschließenden Ringnut 17 versehen, in der das Lagerelement 7 bzw. dessen Ringsegment mit einer über die Printplatte 9 vorstehenden Teillänge aufgenommen sind.

Die Erfindung wurde voranstehend an Ausführungsbeispielen beschrieben. Es versteht sich, dass Änderungen sowie Abwandlungen möglich sind, ohne das dadurch der der Erfindung zugrundeliegende Erfindungsgedanke verlassen wird.

So ist es beispielsweise möglich, anstelle des Permanentmagneten 13 auch eine andere Magnetanordnung vorzusehen, die im Bereich der Magnetsensoren 15 und 16 ein Magnetfeld erzeugen, welches mit der Drehbewegung der Welle 5 umläuft und welches unterschiedliche, von der Drehstellung der Welle 5 abhängige Sensorsignale an den Magnetsensoren 15 und 16 bewirkt.

Vorstehend wurde davon ausgegangen, dass die Sensorik zwei Magnetsensoren 15 und 16 aufweisen. Grundsätzlich besteht auch die Möglichkeit, nur einen derartigen Sensor 15 oder 16 vorzusehen oder aber auch ein Sensorbauelement zu verwenden, das die Funktion von zwei oder mehr Magnetsensoren aufweist.

### Bezugszelchentiste

- 1,1a: Getriebe
- 2: Ankerwelle
- 3: Getriebegehäuse
- 3.1, 3.2: Gehäuseteil
- 4,4a: Getrieberad
- 4,1, 4a.1: nabenartiger Abschnitt des Getrieberades
- 5: Welle
- 5.1: Wellenachse
- 6: Lager
- 7: Lagerelement oder zusätzliches Lager
- 7.1: Stirnfläche
- 7.2.: Ringsegment
- 7.3: Innenraum des Lagerelementes
- 8: elektronische Steuereinrichtung
- 9: Printplatte
- 10: elektrische Komponenten
- 91: Schlitz
- 12: Öffnung
- 13: Permanentmagnet
- 13.1, 13.2: Abschnitt oder Pol des Permanentmagneten 13
- 14: Öffnung
- 15, 16: Magnetsensor
- 17: Nut

## Patentansprüche

1. Elektromotorischer Hilfsantrieb für Fahrzeuge, insbesondere für Scheibenwischerantriebe oder Verstellantriebe für Fahrzeugelemente, mit einem einem Elektromotor nachgeschalteten Getriebe (1), mit wenigstens einem Magnetsensor (15, 16), der mit einer zumindest von einem Permanentmagneten (13) gebildeten und mit einer Getriebewelle (5) oder einem Getrieberad (4) umlaufenden Signalgeber- oder Permanentmagnetanordnung zur Erfassung u.a. der Winkelposition und/oder der Änderung der Winkelposition der Drehbewegung der Welle (5) oder des Getrieberades (4) zusammenwirkt, wobei die Permanentmagnetanordnung (13) stirnseitig an einem in einer Lageranordnung (7) gelagerten Wellenende oder an einem in der Lageranordnung (7) gelagerten und auf der Welle (5) vorgesehenen Getriebeelement (4, 4a) vorgesehen ist, und wobei der wenigstens eine Magnetsensor (15,16) innerhalb der Lageranordnung (7) der Permanentmagnetanordnung (13) in Richtung der Wellenachse (5) gegenüberliegend vorgesehen ist,
**dadurch gekennzeichnet,**
**dass** die Lageranordnung von einem von einem Gehäuseteil (3.2) des Getriebes (3) in das Innere des Getriebes (3) vorstehenden, wenigstens eine Lagerfläche bildenden und mit einer Ausnehmung zur Aufnahme zumindest der Permanentmagnetanordnung (13) und der Magnetsensoren (15, 16) versehenen Lagerelement (7) besteht, und dass das Lagerelement (7) durch Öffnungen (12) der Printplatte (9) derart hindurchgeführt ist, dass ein den wenigstens einen Magnetsensor (15, 16) tragender Abschnitt (9.1) der Printplatte (9) sich innerhalb der Ausnehmung des Lagerelementes (7) befindet.

2. Hilfsantrieb nach Anspruch 1, **dadurch gekennzeichnet, dass** die Achse der von dem wenigstens einen Magnetsensor (15,16) und der Permanentmagnetanordnung (13) gebildeten Sensorik achsgleich mit der Wellenachse (5.1) angeordnet ist.

3. Hilfsantrieb nach Anspruch 1 oder 2, **dadurch gekennzeichnet, dass** die Permanentmagnetanordnung von einem einen Nordpol sowie einen Südpol bindenden Permanentmagneten (13) gebildet ist, und dass sich der Nordpol und der Südpol des Permanentmagneten (13) bezogen auf die Wellenachse (5.1) diametral gegenüberliegen.

4. Hilfsantrieb nach einem der vorhergehenden Ansprüche, **dadurch gekennzeichnet, dass** die Permanentmagnetanordnung (13) an dem Wellenende stirnseitig an der Welle (5) angeordnet ist.

5. Hilfsantrieb nach einem der vorhergehenden Ansprüche, **dadurch gekennzeichnet, dass** die Permanentmagnetanordnung (13) in eine Öffnung (14) der Welle (5) oder eines auf der Welle angeordneten Getriebeelementes, beispielsweise des Getrieberades (4, 4a) angeordnet ist.

6. Hilfsantrieb nach einem der vorhergehenden Ansprüche, **dadurch gekennzeichnet, dass** der wenigstens eine Magnetsensor (15,16) zumindest ein von dem magnetischen Feld und/oder dessen Änderung abhängiges Sensorsignal liefert.

7. Hilfsantrieb nach einem der vorhergehenden Ansprüche, **dadurch gekennzeichnet, dass** der wenigstens eine Magnetsensor (15,16) wenigstens ein von der Richtung oder Polarität des Magnetfeldes abhängiges Sensorsignal liefert.

8. Hilfsantrieb nach einem der vorhergehenden Ansprüche, **dadurch gekennzeichnet, dass** der wenigstens eine Magnetsensor (18,16) einen Magnetwiderstand oder ein Hallsensor ist.

9. Hilfsantrieb nach einem der vorhergehenden Ansprüche, **dadurch gekennzeichnet, dass** die Wellenachse (5.1) den wenigstens einen Magnetsensor (15,16) in seinen Sensormittelpunkt schneidet.

10. Hilfsantrieb nach einem der vorhergehenden Ansprüche, **dadurch gekennzeichnet, dass** der wenigstens eine Magnetsensor (15,16) mit seiner Sensorachse radial zur Wellenachse (5.1) orientiert ist.

11. Hilfsantrieb nach einem der vorhergehenden Ansprüche, **dadurch gekennzeichnet, dass** in Richtung der Wellenachse (5.1) gegeneinander
versetzt wenigstens zwei Magnetsensoren (15,16) vorgesehen sind.

12. Hilfsantrieb nach Anspruch 11, **dadurch gekennzeichnet, dass** die wenigstens zwei Magnetsensoren (15,16) um einen Winkelbetrag um die Wellenachse (5.1) gegeneinander verdreht vorgesehen sind.

13. Hilfsantrieb nach einem der vorhergehenden Ansprüche, **dadurch gekennzeichnet, dass** der wenigstens eine Magnetsensor (15,16) auf einer Platine oder Printplatte (9) eines Steuermoduls (8) angeordnet ist.

14. Hilfsantrieb nach Anspruch 13, **dadurch gekennzeichnet, dass** die Platine (9) mit ihren Oberflächenseiten senkrecht zur Wellenachse (5.1) orientiert ist.

15. Hilfsantrieb nach Anspruch 1, **dadurch gekennzeichnet, dass** das Lagerelement (7) in eine Achsrichtung parallel zur Wellenachse (5.1) geschlitzt ist.

16. Hilfsantrieb nach Anspruch 15, **dadurch gekennzeichnet, dass** das Lagerelement (7) wenigstens einen Schlitz aufweist.

17. Hilfsantrieb nach Anspruch 16, **dadurch gekennzeichnet, dass** das Lagerelement (7) wenigstens durch einen Schlitz (11) in wenigstens zwei Segmente (7.2.) segmentiert ist

18. Hilfsantrieb nach Anspruch 17, **dadurch gekennzeichnet, dass** die Segmente (7.2.) jeweils durch eine Öffnung (12) in der Printplatte (9) hindurchgeführt sind.

## Claims

1. Electric auxiliary drive for vehicles, in particular for windscreen wiper drives or adjustment drives for vehicle members, comprising a gearbox (1) arranged downstream of an electric motor, at least one magnetic sensor (15, 16) which cooperates with a signal transmitter or permanent magnet arrangement formed of at least one permanent magnet (13) and rotating with a gear shaft (5) or a gear wheel (4) in order to detect, inter alia, the angle position and/or modification of the angle position of the rotation of the shaft (5) or the gear wheel (4), the permanent magnet arrangement (13) being provided on the end face of a shaft end mounted in a bearing arrangement (7) or on a gear member (4, 4a) mounted in the bearing arrangement (7) and provided on the shaft (5), and the at least one magnetic sensor (15, 16) within the bearing arrangement (7) being provided opposite the permanent magnet arrangement (13) in the direction of the shaft axis (5),
**characterised in that**
the bearing arrangement consists of a bearing member (7) which projects from a housing part (3.2) of the gearbox (3) into the interior of the gearbox (3), forms at least one bearing surface and is provided with a recess for receiving at least the permanent magnet arrangement (13) and the magnetic sensor (15, 16), and **in that** the bearing member (7) is guided through openings (12) of the printed board (9) in such a way that a portion (9.1), which carries the at least one magnetic sensor (15, 16), of the printed board (9) is located inside the recess of the bearing member (7).

2. Auxiliary drive according to claim 1, **characterised in that** the axis of the sensor unit formed by the at least one magnetic sensor (15, 16) and the permanent magnet arrangement (13) is arranged on the same axis as the shaft axis (5.1).

3. Auxiliary drive according to either claim 1 or claim 2, **characterised in that** the permanent magnet arrangement is formed of a permanent magnet (13) forming a north pole and a south pole, and **in that** the north pole and south pole of the permanent magnet (13) are diametrically opposed in relation to the shaft axis (5.1).

4. Auxiliary drive according to any one of the preceding claims, **characterised in that** the permanent magnet arrangement (13) is arranged on the end of the shaft on the end face of the shaft (5).

5. Auxiliary drive according to any one of the preceding claims, **characterised in that** the permanent magnet arrangement (13) is arranged in an opening (14) of the shaft (5) or of a gear member arranged on the shaft, for example the gear wheel (4, 4a).

6. Auxiliary drive according to any one of the preceding claims, **characterised in that** the at least one magnetic sensor (15, 16) delivers at least one sensor signal which is dependent on the magnetic field and/or the modification thereof.

7. Auxiliary drive according to any one of the preceding claims, **characterised in that** the at least one magnetic sensor (15, 16) delivers at least one sensor signal which is dependent on the direction or polarity of the magnetic field.

8. Auxiliary drive according to any one of the preceding claims, **characterised in that** the at least one magnetic sensor (15,16) is a magnetic resistor or a Hall sensor.

9. Auxiliary drive according to any one of the preceding claims, **characterised in that** the shaft axis (5.1) intersects the at least one magnetic sensor (15, 16) in the sensor centre point thereof.

10. Auxiliary drive according to any one of the preceding claims, **characterised in that** the at least one magnetic sensor (15, 16) is orientated with the sensor axis thereof radial to the shaft axis (5.1).

11. Auxiliary drive according to any one of the preceding claims, **characterised in that** at least two magnetic sensors (15, 16) are provided offset from one another in the direction of the shaft axis (5.1).

12. Auxiliary drive according to claim 11, **characterised in that** the at least two magnetic sensors (15, 16) are provided rotated relative to one another by an angle about the shaft axis (5.1).

13. Auxiliary drive according to any one of the preceding claims, **characterised in that** the at least one magnetic sensor (15, 16) is arranged on a circuit board or printed board (9) of a control module (8).

14. Auxiliary drive according to claim 13, **characterised in that** the circuit board (9) is orientated with its surface sides perpendicular to the shaft axis (5.1).

15. Auxiliary drive according to claim 1, **characterised in that** the bearing member (7) is slotted in an axis direction parallel to the shaft axis (5.1).

16. Auxiliary drive according to claim 15, **characterised in that** the bearing member (7) has at least one slot.

17. Auxiliary drive according to claim 16, **characterised in that** the bearing member (7) is divided into at least two segments (7.2) at least by one slot (11).

18. Auxiliary drive according to claim 17, **characterised in that** the segments (7.2) are each passed through an opening (12) in the printed board (9).

## Revendications

1. Entraînement auxiliaire électromoteur pour véhicules, en particulier pour des entraînements d'essuie-glaces ou des entraînements de réglage d'éléments de véhicules, comprenant une transmission (1) montée en aval d'un moteur électrique, au moins un capteur magnétique (15, 16), qui coopère avec un agencement de générateur de signaux ou d'aimant permanent formé au moins par un aimant permanent (13) et tournant avec un arbre de transmission (5) ou une roue de transmission (4), pour la détection entre autres de la position angulaire et/ou de la variation de la position angulaire du mouvement de rotation de l'arbre (5) ou de la roue de transmission (4), l'agencement d'aimant permanent (13) étant prévu du côté frontal au niveau d'une extrémité d'arbre montée dans un agencement de palier (7) ou au niveau d'un élément de transmission (4, 4a) monté dans l'agencement de palier (7) et prévu sur l'arbre (5), et l'au moins un capteur magnétique (15, 16) étant prévu à l'intérieur de l'agencement de palier (7) à l'opposé de l'agencement d'aimant permanent (13) dans la direction de l'axe de l'arbre (5),
**caractérisé en ce que**
l'agencement de palier se compose d'un élément de palier (7) saillant depuis une partie de boîtier (3.2) de la transmission (3) à l'intérieur de la transmission (3), formant au moins une surface de palier et pourvu d'un évidement pour recevoir au moins l'agencement d'aimant permanent (13) et les capteurs magnétiques (15, 16), et **en ce que** l'élément de palier (7) est guidé à travers des ouvertures (12) de la plaque à circuits imprimés (9) de telle sorte qu'une portion (9.1) de la plaque à circuits imprimés (9) portant l'au moins un capteur magnétique (15, 16) se trouve à l'intérieur de l'évidement de l'élément de palier (7).

2. Entraînement auxiliaire selon la revendication 1, **caractérisé en ce que** l'axe du système de capteurs formé par l'au moins un capteur magnétique (15, 16) et l'agencement d'aimant permanent (13) est disposé en coïncidence avec l'axe de l'arbre (5.1).

3. Entraînement auxiliaire selon la revendication 1 ou 2, **caractérisé en ce que** l'agencement d'aimant permanent est formé par un aimant permanent (13) formant un pôle nord et un pôle sud, et **en ce que** le pôle nord et le pôle sud de l'aimant permanent (13) sont diamétralement opposés par rapport à l'axe de l'arbre (5.1).

4. Entraînement auxiliaire selon l'une quelconque des revendications précédentes, **caractérisé en ce que** l'agencement d'aimant permanent (13) est disposé sur l'arbre (5) au niveau de l'extrémité d'arbre du côté frontal.

5. Entraînement auxiliaire selon l'une quelconque des revendications précédentes, **caractérisé en ce que** l'agencement d'aimant permanent (13) est disposé dans une ouverture (14) de l'arbre (5) ou d'un élément de transmission disposé sur l'arbre, par exemple de la roue de transmission (4, 4a).

6. Entraînement auxiliaire selon l'une quelconque des revendications précédentes, **caractérisé en ce que** l'au moins un capteur magnétique (15, 16) fournit au moins un signal de capteur dépendant du champ magnétique et/ou de sa variation.

7. Entraînement auxiliaire selon l'une quelconque des revendications précédentes, **caractérisé en ce que** l'au moins un capteur magnétique (15, 16) fournit au moins un signal de capteur dépendant de la direction ou de la polarité du champ magnétique.

8. Entraînement auxiliaire selon l'une quelconque des revendications précédentes, **caractérisé en ce que** l'au moins un capteur magnétique (15, 16) est une résistance magnétique ou un capteur de Hall.

9. Entraînement auxiliaire selon l'une quelconque des revendications précédentes, **caractérisé en ce que** l'axe de l'arbre (5.1) coupe l'au moins un capteur magnétique (15, 16) en son centre de capteur.

10. Entraînement auxiliaire selon l'une quelconque des revendications précédentes, **caractérisé en ce que** l'au moins un capteur magnétique (15, 16) est orienté avec son axe de capteur radialement par rapport à l'axe de l'arbre (5.1).

11. Entraînement auxiliaire selon l'une quelconque des revendications précédentes, **caractérisé en ce qu'**au moins deux capteurs magnétiques (15, 16) sont prévus de manière décalée l'un par rapport à l'autre dans la direction de l'axe de l'arbre (5.1).

12. Entraînement auxiliaire selon la revendication 11, **caractérisé en ce que** les au moins deux capteurs magnétiques (15, 16) sont prévus de manière tournée l'un par rapport à l'autre autour de l'axe de l'arbre (5.1) d'une certaine valeur angulaire.

13. Entraînement auxiliaire selon l'une quelconque des revendications précédentes, **caractérisé en ce que** l'au moins un capteur magnétique (15, 16) est disposé sur une plaquette ou une plaque à circuits imprimés (9) d'un module de commande (8).

14. Entraînement auxiliaire selon la revendication 13, **caractérisé en ce que** la plaquette (9) est orientée avec ses côtés de surface perpendiculairement à l'axe de l'arbre (5.1).

15. Entraînement auxiliaire selon la revendication 1, **caractérisé en ce que** l'élément de palier (7) est fendu dans une direction axiale parallèlement à l'axe de l'arbre (5.1).

16. Entraînement auxiliaire selon la revendication 15, **caractérisé en ce que** l'élément de palier (7) présente au moins une fente.

17. Entraînement auxiliaire selon la revendication 16, **caractérisé en ce que** l'élément de palier (7) est segmenté par une fente (11) en au moins deux segments (7.2).

18. Entraînement auxiliaire selon la revendication 17, **caractérisé en ce que** les segments (7.2) sont guidés à chaque fois à travers une ouverture (12) dans la plaque à circuits imprimés (9).
